(19) Europäisches Patentamt
European Patent Office
Office européen des brevets

(11) Veröffentlichungsnummer: **0 012 320**
**A1**

(12) # EUROPÄISCHE PATENTANMELDUNG

(21) Anmeldenummer: **79104856.4**

(22) Anmeldetag: **04.12.79**

(51) Int. Cl.³: **C 07 F 9/40,** C 07 F 9/58,
C 07 F 9/65, A 01 N 57/18
// C07F9/42

(30) Priorität: **11.12.78 DE 2853450**

(43) Veröffentlichungstag der Anmeldung: **25.06.80**
**Patentblatt 80/13**

(84) Benannte Vertragsstaaten: **BE CH DE FR GB IT NL**

(71) Anmelder: **BASF Aktiengesellschaft,**
**Carl-Bosch-Strasse 38, D-6700 Ludwigshafen (DE)**

(72) Erfinder: **Loeffler, Hans-Peter, Dr. Dipl.-Chem.,**
**Defreggerstrasse 14, D-6700 Ludwigshafen (DE)**
Erfinder: **Kiehs, Karl, Dr. Dipl.-Chem.,**
**Sudetenstrasse 22, D-6840 Lampertheim (DE)**
Erfinder: **Adolphi, Heinrich, Dr. Dipl.-Biol., Kalmitweg 11,**
**D-6703 Limburgerhof (DE)**

(54) **Thionophosphonsäureester, Verfahren zu ihrer Herstellung und ihre Verwendung zur Bekämpfung von Schädlingen.**

(57) Thionophosphonsäureester der Formel

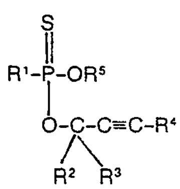

I,

in der

$R^1$ einen Alkylrest mit 1 bis 3 Kohlenstoffatomen, der durch Halogen substituiert sein kann, oder einen Phenylrest, der durch Alkylgruppen mit 1 bis 3 Kohlenstoffatomen substituiert sein kann,

$R^2$ Wasserstoff oder einen Alkylrest mit 1 bis 4 Kohlenstoffatomen,

$R^3$ Wasserstoff oder einen Alkylrest mit 1 bis 4 Kohlenstoffatomen,

$R^4$ Wasserstoff oder einen Alkylrest mit 1 bis 3 Kohlenstoffatomen, der durch Halogen substituiert sein kann, und

$R^5$ einen Arylrest, der durch Halogen, Alkyl mit 1 bis 4 Kohlenstoffatomen, Nitro, Cyano, Acylreste mit 2 bis 5 Kohlenstoffatomen, Alkoxy- oder Alkylthioreste mit 1 bis 4 Kohlenstoffatomen, Aryloxy-, Arylthio- oder Arylazoreste mit 6 bis 10 Kohlenstoffatomen, Alkylsulfinyl- oder Alkylsulfonylreste mit 1 bis 3 Kohlenstoffatomen, Arylsulfinyl- oder Arylsulfonylreste mit 6 bis 8 Kohlenstoffatomen substituiert sein kann, einen stickstoffhaltigen, heterocyclischen Rest mit 5 oder 6 Ringgliedern, der durch Halogen, Alkyl, Alkoxy oder Alkylthio mit 1 bis 4 Kohlenstoffatomen oder durch Dialkylamino mit 1 bis 4 Kohlenstoffatomen je Alkylgruppe substituiert sein kann, oder einen unverzweigten oder verzweigten Alkenylrest mit 2 bis 4 Kohlenstoffatomen, der durch Halogen, N-Alkyl-carbamoylreste oder N,N-Dialkyl-carbamoylreste mit 1 bis 6 Kohlenstoffatomen in einer Alkylgruppe, Alkoxycarbonyl, Aryloxycarbonyl oder durch gegebenenfalls durch Halogen, Nitro, Alkyl oder Alkoxy mit 1 bis 4 Kohlenstoffatomen substituiertes Phenyl substituiert sein kann,

bedeuten.

Verfahren zu ihrer Herstellung und ihre Verwendung zur Bekämpfung von Schädlingen.

**EP 0 012 320 A1**

# Thionophosphonsäureester, Verfahren zu ihrer Herstellung und ihre Verwendung zur Bekämpfung von Schädlingen

Die vorliegende Erfindung betrifft neue Thionophosphonsäureester, ein Verfahren zu ihrer Herstellung, Schädlingsbekämpfungsmittel, die diese Thionophosphonsäureester als Wirkstoffe enthalten, sowie ein Verfahren zur Bekämpfung von Schädlingen mit diesen Wirkstoffen.

Es ist bekannt, daß Alkyl-propargyl-phosphonsäureester Synergisten für insektizide Wirkstoffe aus der Klasse der Carbamate und der Pyrethroide sind. Die Verbindungen sind jedoch selbst nicht insektizid wirksam (US-PS 3 856 896).

Es wurde gefunden, daß neue Thionophosphonsäureester der Formel I

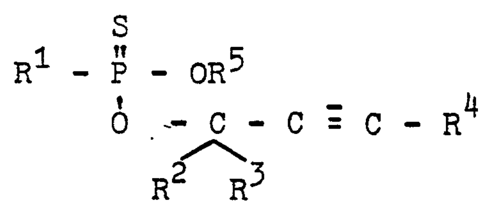

I,

in der

$R^1$ einen Alkylrest mit 1 bis 3 Kohlenstoffatomen, der durch Halogen substituiert sein kann, oder einen Phenylrest, der durch Alkylgruppen mit 1 bis 3 Kohlenstoffatomen substituiert sein kann,

$R^2$ Wasserstoff oder einen Alkylrest mit 1 bis 4 Kohlenstoffatomen,

$R^3$ Wasserstoff oder einen Alkylrest mit 1 bis 4 Kohlenstoffatomen,

H/sk

$R^4$ Wasserstoff oder einen Alkylrest mit 1 bis 3 Kohlenstoffatomen, der durch Halogen substituiert sein kann, und

$R^5$ einen Arylrest, der durch Halogen, Alkyl mit 1 bis 4 Kohlenstoffatomen, Nitro, Cyano, Acylreste mit 2 bis 5 Kohlenstoffatomen, Alkoxy- oder Alkylthioreste mit 1 bis 4 Kohlenstoffatomen, Aryloxy-, Arylthio- oder Arylazoreste mit 6 bis 10 Kohlenstoffatomen, Alkylsulfinyl- oder Alkylsulfonylreste mit 1 bis 3 Kohlenstoffatomen, Arylsulfinyl- oder Arylsulfonylreste mit 6 bis 8 Kohlenstoffatomen substituiert sein kann, einen stickstoffhaltigen, heterocyclischen Rest mit 5 oder 6 Ringgliedern, der durch Halogen, Alkyl, Alkoxy oder Alkylthio mit 1 bis 4 Kohlenstoffatomen oder durch Dialkylamino mit 1 bis 4 Kohlenstoffatomen je Alkylgruppe substituiert sein kann, oder einen unverzweigten oder verzweigten Alkenylrest mit 2 bis 4 Kohlenstoffatomen, der durch Halogen, N-Alkylcarbamoylreste oder N,N-Dialkyl-carbamoylreste mit 1 bis 6 Kohlenstoffatomen in einer Alkylgruppe, Alkoxycarbonyl, Aryloxycarbonyl oder gegebenenfalls durch Halogen, Nitro, Alkyl oder Alkoxy mit 1 bis 4 Kohlenstoffatomen substituiertes Phenyl substituiert sein kann, bedeuten,

eine sehr gute insektizide, akarizide und nematizide Wirkung besitzen.

In der Formel I steht $R^1$ für einen unverzweigten oder verzweigten, gegebenenfalls durch Halogen substituierten Alkylrest mit 1 bis 3 Kohlenstoffatomen, wie Methyl, Chlormethyl, Äthyl, n-Propyl, Isopropyl, oder für einen Phenylrest, der durch Alkylgruppen mit 1 bis 3 Kohlenstoffatomen substituiert sein kann, wie Phenyl, 4-Methyl-phenyl.

$R^2$ und $R^3$ können gleich oder verschieden sein und bedeuten Wasserstoff oder unverzweigtes oder verzweigtes Alkyl mit 1 bis 4 Kohlenstoffatomen, wie Methyl, Äthyl, einen Propyl- oder Butylrest.

$R^4$ bedeutet Wasserstoff oder einen unverzweigten oder verzweigten, gegebenenfalls durch Halogen substituierten Alkylrest mit 1 bis 3 Kohlenstoffatomen, wie Methyl, Chlormethyl, Äthyl, n-Propyl, Isopropyl.

$R^5$ in Formel I bedeutet einen Arylrest, wie Phenyl, α-Naphthyl, ß-Naphthyl. Diese Reste können einen oder mehrere Substituenten tragen, beispielsweise Halogen, wie Chlor, Brom, unverzweigte oder verzweigte Alkylreste mit 1 bis 4 Kohlenstoffatomen, wie Methyl, Äthyl, n-Propyl, Isopropyl, n-Butyl, tert.-Butyl, Isobutyl, sec.-Butyl, Nitro, Cyano, Acylreste mit 2 bis 6 Kohlenstoffatomen, wie Acetyl, Propionyl, Butyryl, Valeryl, Isovaleryl, Hexanoyl, Alkoxy- oder Alkylthioreste mit 1 bis 4 Kohlenstoffatomen, wie Methoxy, Methylthio, Äthoxy, Äthylthio, n-Propoxy, Isopropoxy, n-Butoxy, Isobutoxy, n-Propylthio, Isopropylthio, sec.-Butylthio, Isobutylthio, ryloxy-, Arylthio- oder Arylazoreste mit 6 bis 10 Kohlenstoffatomen, wie Phenoxy, Phenylthio, α-Naphthyloxy, ß-Naphthyloxy, Phenylazo, Alkylsulfinyl- oder Alkylsulfonylreste mit 1 bis 3 Kohlenstoffatomen, wie Methylsulfinyl, Methylsulfonyl, Äthylsulfinyl, Äthylsulfonyl, n-Propylsulfonyl, Isopropylsulfinyl, Arylsulfinyl- oder Arylsulfonylreste mit 6 bis 8 Kohlenstoffatomen, wie Phenylsulfinyl, Phenylsulfonyl, p-Tolylsulfonyl, m-Tolylsulfonyl, 3,5-Xylylsulfinyl, 3,5-Xylylsulfonyl, m-Tolylsulfinyl.

Beispiele substituierter Arylreste für $R^5$ sind 4-Nitrophenyl, 4-Nitro-3-methyl-phenyl, 4-Cyanophenyl, 2-Chlor-4--brom-phenyl, 2,4-Dichlorphenyl, 4-Methylthiophenyl, 4-Me-

thylthio-3-methyl-phenyl, 4-Phenylazo-phenyl, 4-Phenoxy--phenyl, 4-Napthyloxyphenyl, 4-Nitro-3-chlor-phenyl, 4--tert.-Butyl-2-chlor-phenyl, 4-Methylthio-3-chlor-phenyl, 4-Methylsulfinyl-phenyl, 4-Phenylsulfonyl-phenyl.

$R^5$ kann außerdem für einen stickstoffhaltigen, heterocyclischen Rest mit 5 oder 6 Ringgliedern stehen, wie Pyrazolyl-, Triazolyl-, Pyridyl-, Pyrazinyl- oder Pyrimidinylreste, stehen. Diese Reste können durch Halogen, wie Chlor, Alkyl, Alkoxy oder Alkylthio mit 1 bis 4 Kohlenstoffatomen, wie Methyl, Äthyl, n-Propyl, Methoxy, Methylthio, Isopropyl, Isopropylthio, Butyl-, Butoxy- oder Butylthioreste, oder durch Dialkylamino mit 1 bis 4 Kohlenstoffatomen je Alkylgruppe, wie Dimethylamino, Diäthylamino, Di-n-propylamino, Di-n-butylamino, Diisopropylamino, Diisobutylamino, substituiert sein.

Ferner kann $R^5$ für einen unverzweigten oder verzweigten Alkenylrest mit 2 bis 4 Kohlenstoffatomen stehen, der durch Halogen, wie Chlor, N-Alkylcarbamoylreste oder N,N-Dialkyl--carbamoylreste mit 1 bis 6 Kohlenstoffatomen in einer Alkylgruppe, Alkoxycarbamoyl, Aryloxycarbamoyl oder gegebenenfalls durch Halogen, Nitro, Alkyl oder Alkoxy mit 1 bis 4 Kohlenstoffatomen substituiertes Phenyl substituiert sein kann. Beispiele für solche Reste sind 2-(N,N-Dimethylcarbamoyl)-1-methyl-vinyl, 2-(N-methylcarbamoyl)-1-methyl-vinyl, 2-(N,N-Diäthylcarbamoyl)-2-chlor-1-methyl-vinyl, 2-Äthoxycarbonyl-1-methyl-vinyl.

Bevorzugte Verbindungen der Formel I sind solche, bei denen $R^5$ einen Phenylrest, der durch Halogen, Alkyl mit 1 bis 4 Kohlenstoffatomen, Nitro, Cyano oder Alkylthio mit 1 bis 4 Kohlenstoffatomen substituiert ist, bedeutet.

Weiterhin wurde gefunden, daß die neuen Thionophosphonsäureester der Formel I durch Umsetzung von Thionophosphonesterchloriden der Formel II

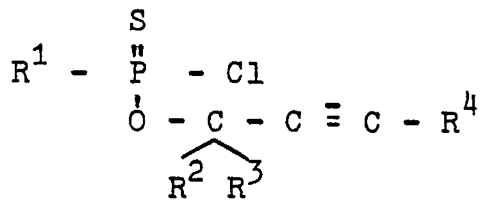

II,

in der $R^1$, $R^2$, $R^3$ und $R^4$ die oben genannten Bedeutungen haben, mit Verbindungen der Formel III

$$R^5OH$$

III,

in der $R^5$ die oben genannten Bedeutungen hat, oder einem Alkalisalz einer Verbindung der Formel III in Gegenwart eines inerten organischen Lösungsmittels und gegebenenfalls in Gegenwart einer Base erhalten werden.

Insbesondere beim Umsatz von Verbindungen der Formel III, bei denen $R^5$ für einen heterocyclischen Rest steht, ist es empfehlenswert, das Alkalisalz, vorzugsweise das Natriumsalz, der Verbindung III mit dem Thionophosphonesterchlorid umzusetzen.

Das Verfahren zur Herstellung der erfindungsgemäßen Verbindungen wird in Gegenwart geeigneter Lösungs- und Verdünnungsmittel durchgeführt. Als solche kommen inerte organische Solventien in Betracht, beispielsweise aliphatische und aromatische, gegebenenfalls chlorierte Kohlenwasserstoffe, wie Benzol, Toluol, Xylole, Chlorbenzole, Benzin, Tetrachlorkohlenstoff, 1,2-Dichloräthan, Methylenchlorid, Chloroform, Äther, wie Diäthyläther, Dibutyläther, Amide, wie Dimethylformamid, außerdem Nitrile, wie Acetonitril, Benzonitril. Auch Gemische dieser Lösungsmittel können

verwendet werden. Die Reaktion kann auch zweiphasig durchgeführt werden, wobei als organische Phase die genannten Lösungsmittel verwendet werden.

Zweckmäßigerweise wird der bei der Umsetzung freiwerdende Chlorwasserstoff durch Zusatz einer Base gebunden. Geeignete Basen sind Amine, wie Trialkylamine, Pyridin, Chinolin, anorganische Basen, wie Alkalihydroxide, Erdalkalihydroxide, Alkalicarbonate, beispielsweise Kaliumcarbonat. Die Base wird in mindestens äquimolarer Menge, bezogen auf Ausgangsstoff der Formel II oder III, eingesetzt.

Die Reaktionstemperatur kann innerhalb eines größeren Bereiches variiert werden. Sie liegt in der Regel zwischen 20 und 100°C.

Im allgemeinen läßt man die Umsetzung bei Normaldruck ablaufen.

Die Reaktionskomponenten werden vorzugsweise in äquimolarem Verhältnis eingesetzt. Ein Überschuß der einen oder anderen Komponente bringt keine wesentlichen Vorteile. Die Umsetzung verläuft praktisch quantitativ.

Die erfindungsgemäßen Verbindungen fallen, abhängig von der Art der Substituenten, als Racemat oder als Diastereomerengemisch an; auch optisch reine Verbindungen können erhalten werden.

Die erfindungsgemäßen Verbindungen der Formel I können ebenso durch Umsetzung von Thionophosphonesterchloriden der Formel IV

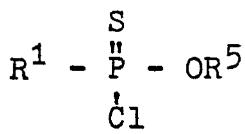 IV,

in der $R^1$ und $R^5$ die obengenannten Bedeutungen haben, mit Verbindungen der Formel V

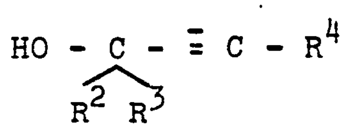 V,

in der $R^2$, $R^3$ und $R^4$ die obengenannten Bedeutungen haben, unter den vorstehend erläuterten Reaktionsbedingungen hergestellt werden.

Die Thionophosphonesterchloride der Formeln II und IV können aus den Thionophosphonsäuredichloriden der Formel VI

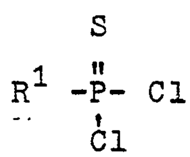 VI,

in der $R^1$ die obengenannten Bedeutungen hat, durch Umsetzung mit äquimolaren Mengen einer Verbindung der Formel III oder V erhalten werden (Houben-Weyl, Methoden der org.Chem. Band 12/1, S. 560, Georg-Thieme-Verlag, Stuttgart, 1963).

Diese Reaktion wird in einem inerten organischen Lösungs- oder Verdünnungsmittel durchgeführt. Geeignete Lösungsmittel sind acyclische und cyclische Äther, wie Diäthyläther, Dioxan, Tetrahydrofuran, Nitrile, wie Acetonitril, aromatische und gegebenenfalls chlorierte aliphatische Kohlenwasserstoffe, wie Toluol, n-Hexan, Dichlormethan.

Die Reaktion kann ohne Zugabe von Basen durchgeführt werden, wobei der entstehende Chlorwasserstoff aus dem Reaktionsgemisch entweicht. Der entstehende Chlorwasserstoff kann aber auch mit Basen gebunden werden. Geeignet sind z.B. Trialkylamine, Pyridine oder anorganische Verbindungen, wie Alkalihydroxide oder -carbonate, z.B. Kaliumcarbonat oder Natriumhydroxid.

Anstelle von Verbindungen der Formel III oder V und Base können auch die Natriumsalze der Verbindungen der Formel III oder V eingesetzt werden; diese Salze lassen sich ohne Schwierigkeiten, beispielsweise durch Umsetzung von Natriumhydrid mit diesen Verbindungen,herstellen.

Die folgenden Beispiele erläutern die Herstellung der erfindungsgemäßen Thionophosphonsäureester der Formel I.

<u>Beispiel 1</u>

a) Methylthionophosphonsäure-O-propargylesterchlorid

Zu 53 g Natriumhydrid (80 %ig) in 2 l Diäthyläther tropft man unter Rühren 89,6 g Proparylalkohol; gleichzeitig wird Stickstoff durch das Reaktionsgefäß geleitet. Nach Beendigung der Wasserstoffentwicklung wird die erhaltene Suspension in kleinen Portionen unter starkem Rühren bei $-40^{o}C$ innerhalb von 3 Stunden zu einer Lösung von 214,4 g Methylthionophosphonsäuredichlorid in 1 l Diäthyläther gegeben. Dann rührt man 3 Stunden bei $-40^{o}C$ und 5 Stunden bei $+20^{o}C$ nach. Das noch überschüssige Natriumhydrid wird vorsichtig hydrolysiert; man wäscht dreimal mit 400 ml Wasser, trocknet mit Natriumsulfat, entfernt das Lösungsmittel am Rotationsverdampfer und anschließend leicht flüchtige Verunreinigungen unter vermin-

dertem Druck. Man erhält 224 g Methylthionophosphonsäure-O-propargylesterchlorid in Form eines bräunlichen Öls vom Brechungsindex $n_D^{24}$ = 1.5180. Das Produkt kann ohne zusätzliche Reinigung zur weiteren Umsetzung verwendet werden.

b) Methylthionophosphonsäure-O-propargyl-O-(2,3,5-trichlor-pyridyl-(2))-ester

Zu 19,8 g 2-Hydroxy-3,5,6-trichlorpyridin in 100 ml Toluol gibt man 18 g 30 %ige Natriummethanolatlösung in Methanol. Nach der Zugabe von 50 ml Toluol wird das Lösungsmittel unter vermindertem Druck entfernt. Der Rückstand wird in 150 ml Acetonitril suspendiert. In dieser Suspension tropft man 16,8 g Methylthionophosphonsäure-O-propargylesterchlorid. Man rührt 20 Std. bei 20°C nach, entfernt das Lösungsmittel, nimmt in Toluol auf und wäscht mit Wasser, verdünnter Natronlauge und nochmals mit Wasser. Anschließend wird mit Natriumsulfat getrocknet und das Lösungsmittel entfernt. Der Rückstand liefert nach dem Verreiben mit Petroläther 21,8 g Produkt mit dem Schmelzpunkt 86 bis 88°C.

Beispiel 2

a) Äthylthionophosphonsäure-O-propargylesterchlorid

Zu 83,5 g Äthylthionophosphonsäuredichlorid in 300 ml Toluol tropft man 28 g Propargylalkohol. Danach tropft man zu diesem Gemisch bei 0 bis 20°C unter Rühren 50,5 g Triäthylamin, wobei eine Festsubstanz auszufallen beginnt. Man rührt zwei Stunden bei Raumtemperatur nach, filtriert ab, engt das Filtrat ein und destilliert. Man erhält 55 g Produkt vom Siedepunkt 56°C/0,27 mbar.

b) Äthylthionophosphonsäure-O-propargyl-O-(4-nitrophenyl)--ester

Zu 11,12 g 4-Nitrophenol und 11,04 g Kaliumcarbonat in 70 ml Acetonitril tropft man 12,8 g Äthylthionophosphonsäure-O-propargylesterchlorid. Man rührt 2 Std. bei 50°C, entfernt das Lösungsmittel am Rotationsverdampfer, nimmt den Rückstand in 300 ml Toluol auf und wäscht mit verdünnter Natronlauge, anschließend mit Wasser. Nach dem Trocknen mit Natriumsulfat wird das Lösungsmittel abgezogen und leichterflüchtige Verunreinigungen werden bei 40°C/0,67 mbar entfernt. Man erhält 14 g Äthylthionophosphonsäure-O-propargyl-O--(4-nitrophenyl)-ester; $n_D^{21}$ = 1,5723.

Beispiel 3

a) Methylthionophosphonsäure-O-(1-methylpropargyl)-esterchlorid

53 g Natriumhydrid, 112 g 1-Methylpropargylalkohol und 214,4 g Methylthionophosphorsäuredichlorid werden analog Beispiel 1a umgesetzt. Man erhält 229 g Methylthionophosphonsäure-O-1-methylpropargylesterchlorid vom Brechungsindex $n_D^{24}$ = 1.5032, das ohne Reinigung zur weiteren Umsetzung verwendet werden kann.

Analog erhält man durch Umsetzung von 1-Methyl-propargylalkohol mit Chlormethyl-thionophosphonesterdichlorid Chlormethylthionophosphonsäure-O-(1-methylpropargyl)-esterchlorid als schwachbraunes Öl vom $n_D^{25}$ = 1.5240.

b) Methylthionophosphonsäure-O-(1-methylpropargyl)-O-(4--nitrophenyl)-ester

Zu 139 g 4-Nitrophenol in 1 l Acetonitril gibt man 138 g Kaliumcarbonat. In diese Mischung werden unter Rühren 164,3 g Methylthionophosphonsäure-O-(1-methylpropargyl)-esterchlorid getropft. Man rührt 6 Stunden bei 50°C nach. Man entfernt das Lösungsmittel, nimmt in 1 l Toluol auf, wäscht die Toluollösung mit Wasser, 2 n Natronlauge und wieder mit Wasser, trocknet mit Natriumsulfat und entfernt das Lösungsmittel. Das zurückbleibende Kristallisat wird mit n-Pentan verrührt und abgesaugt. Man erhält 159 g Produkt vom Schmelzpunkt 64-67 °C.

Folgende Verbindungen der Formel I lassen sich beispielsweise nach den angegebenen Verfahren herstellen:

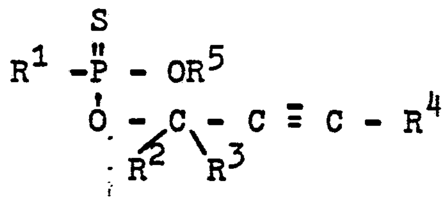

| Nr. | $R^1$ | $R^2$ | $R^3$ | $R^4$ | $R^5$ | phys. Daten |
|---|---|---|---|---|---|---|
| 1 | $CH_3$ | H | H | H | 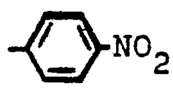 | Fp. 53°C |
| 2 | " | " | $CH_3$ | " | " | Fp. 64-67°C |
| 3 | " | " | H | $CH_3$ | " | |
| 4 | $C_2H_5$ | " | H | " | " | $n_D^{21}$ 1.5723 |
| 5 | " | " | $CH_3$ | " | " | $n_D^{25}$ 1.5590 |
| 6 | " | $CH_3$ | " | " | " | |
| 7 | " | H | H | " | " | |
| 8 | " | " | " | $CH_2Cl$ | " | |
| 9 | $C_6H_5$ | " | " | H | " | $n_D^{20}$ 1.6091 |
| 10 | " | " | $CH_3$ | " | " | $n_D^{23}$ 1.5940 |
| 11 | $ClCH_2$ | H | H | " | " | Fp. 60-62°C |
| 12 | " | " | $CH_3$ | " | " | |
| 13 | $CH_3$ | H | H | H | 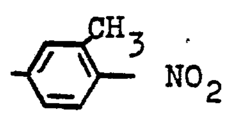 | Fp. 49°C |
| 14 | " | " | $CH_3$ | H | " | Fp. 51-54°C |
| 15 | " | $CH_3$ | " | " | " | |
| 16 | " | H | " | $CH_3$ | " | |
| 17 | $C_2H_5$ | H | H | H | " | $n_D^{27}$ 1.5642 |
| 18 | " | " | $CH_3$ | " | " | |
| 19 | " | " | H | $CH_2Cl$ | " | |
| 20 | $ClCH_2$ | H | H | H | " | $n_D^{24}$ 1.5735 |

| Nr. | $R^1$ | $R^2$ | $R^3$ | $R^4$ | $R^5$ | phys.Daten |
|---|---|---|---|---|---|---|
| 21 | $ClCH_2$ | H | $CH_3$ | H | 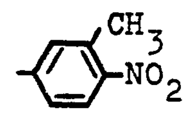 | |
| 22 | $C_6H_5$ | H | H | H | " | |
| 23 | $CH_3$ | H | H | H | 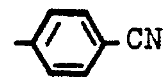 | Fp. 47°C |
| 24 | " | " | $CH_3$ | " | " | Fp.60-68°C |
| 25 | $C_2H_5$ | " | H | " | " | |
| 26 | " | " | $CH_3$ | " | " | |
| 27 | $C_6H_5$ | H | H | H | " | $n_D^{24}$ 1.5973 |
| 28 | $CH_3$ | H | H | H | 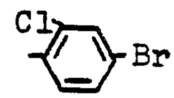 | $n_D^{28}$ 1.5822 |
| 29 | " | " | $CH_3$ | H | " | $n_D^{22}$ 1.5705 |
| 30 | $C_2H_5$ | " | H | " | " | |
| 31 | $CH_3$ | " | $CH_3$ | " | 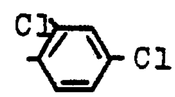 | $n_D^{21}$ 1.5430 |
| 32 | " | " | H | " | " | |
| 33 | $ClCH_2$ | H | H | " | " | |
| 34 | $C_6H_5$ | H | H | H | " | $n_D^{24}$ 1.6055 |
| 35 | " | " | $CH_3$ | " | " | $n_D^{30}$ 1.5881 |
| 36 | $CH_3$ | H | H | H | 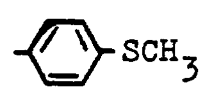 | $n_D^{28}$ 1.5845 |
| 37 | " | " | $CH_3$ | " | " | $n_D^{22}$ 1.5582 |
| 38 | " | $CH_3$ | " | " | " | |
| 39 | " | H | H | $CH_3$ | " | |
| 40 | $C_2H_5$ | H | H | H | " | $n_D^{32}$ 1.5754 |
| 41 | " | " | $CH_3$ | " | " | |
| 42 | $C_6H_5$ | " | H | H | " | |
| 43 | " | H | $CH_3$ | H | " | $n_D^{24}$ 1.6045 |
| 44 | $ClCH_2$ | H | H | H | " | |

| Nr. | $R^1$ | $R^2$ | $R^3$ | $R^4$ | $R^5$ | phys.Daten |
|---|---|---|---|---|---|---|
| 45 | $CH_3$ | H | H | H | 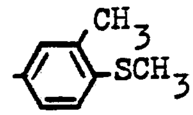 | $n_D^{21}$ 1.5800 |
| 46 | " | " | $CH_3$ | H | " | $n_D^{21}$ 1.5602 |
| 47 | $C_2H_5$ | " | H | H | " | |
| 48 | " | " | $CH_3$ | H | 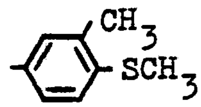 | |
| 49 | $C_6H_5$ | " | H | H | " | |
| 50 | $ClCH_2$ | " | " | H | " | $n_D^{24}$ 1.5852 |
| 51 | " | " | $CH_3$ | H | " | |
| 52 | $CH_3$ | " | H | H | 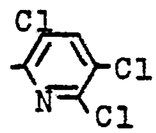 | Fp.86-88°C |
| 53 | " | " | $CH_3$ | H | " | Fp.101-103°C |
| 54 | $C_2H_5$ | " | H | H | " | |
| 55 | " | " | $CH_3$ | H | " | |
| 56 | $C_6H_5$ | " | H | H | " | Fp.69-71°C |
| 57 | " | " | $CH_3$ | H | " | |
| 58 | $CH_3$ | " | H | H | 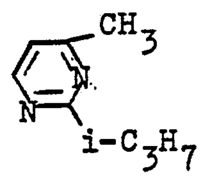 | $n_D^{25}$ 1.5246 |
| 59 | " | " | $CH_3$ | H | " | $n_D^{22}$ 1.5162 |
| 60 | $C_2H_5$ | " | H | H | " | |
| 61 | " | " | $CH_3$ | H | " | |
| 62 | $C_6H_5$ | " | H | H | " | |
| 63 | " | " | $CH_3$ | H | " | $n_D^{23}$ 1.553 |
| 64 | $CH_3$ | " | H | H | $-C(CH_3)=CHCON(C_2H_5)_2$ | $n_D^{24}$ 1.5186 |
| 65 | " | " | $CH_3$ | H | " | $n_D^{23}$ 1.5098 |
| 66 | $C_2H_5$ | " | " | H | " | |
| 67 | " | " | $CH_3$ | H | " | |

Die erfindungsgemäßen Thionophosphonsäureester der Formel I sind geeignet, Schädlinge aus der Klasse der Insekten, Spinnentiere und Nemathelminthes wirksam zu bekämpfen.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria Mellonella (Wachsmotte), Malacosoma neustria (Ringelspinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Großer Frostspanner), Bupalus piniarus (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweißling), Aporia crataegi (Baumweißling);

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agricotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varicestris (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüßler), Otiorrhynchus ovatus (Erdbeerwurzelrüßler), Hylobies abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefruchter Wandgärtner);

aus der Ordnung der Zweiflügler (Diptera) beispielsweise Mayetiola destructor (Hessenfliege), Dasyneura brassicae (Kohlschoten-Gallmücke), Contarinia tritici (Gelbe Weizen--Gallmücke), Haplodiplosis equestris (Sattelmücke), Tipula

paludosa (Wiesenschnake), Tipula oleracea (Kohlschnake), Dacus cucurbitae (Melonenfliege), Dacus oleae (Olivenfliege), Ceratitis capitata (Mittelmeer-Fruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege); Musca domestica (Stubenfliege);

aus der Ordnung der Hautflügler (Hymenoptera) beispielsweise Athalia rosae (Rübenblattwespe), Hoplocampa minuta (Pflaumensägewespe), Monomorium pharaonis (Pharaoameise), Solenopsis geminata (Feuerameise), atta sexdens (Blattschneiderameise);

aus der Ordnung der Wanzen (Heteroptera) beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze);

aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysphis radicola (Mehlige Apfelfalterlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus),

Myzodes persicae (Grüne Pfirsichlaus), Myzus cerasi (Schwarze Sauerkirschenlaus), Dysaulacorthum pseudosolani (Gefleckte Kartoffellaus), Acyrthosiphon onobrychis (Grüne Erbsenlaus), Macrosiphon rasae (Große Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus);

aus der Ordnung der Termiten (Isoptera) beispielsweise Reticulitermes lucifugus;
aus der Ordnung der Geradflügler (Orthoptera) beispielsweise Forficula auricularia (Gemeiner Ohrwurm), Acheta domestica (Grille), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrekke), Melanoplus spretus (Felsengebirgsheuschrecke), Melanoplus femur-rubrum (Rotbeinige Heuschrecke), Blatta orientalis (Küchenschabe), Blattella germanica (Deutsche Schabe), Periplaneta americana (Amerikanische Schabe), Blabera gigantea (Riesenschabe).

Zur Klasse der Spinnentiere (Arachnoidea) gehören Milben und Zecken (Acarina), beispielsweise Ixodes ricinus (Holzbock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Zur Klasse der Nemathelminthes zählen beispielsweise Wurzelgallennematoden, z.B. Meloidogyne incognita, Meloidogyne hapla, Meloidogyne javanica, Zysten bildende Nemato-

den, z.B. Heterodera rostochiensis, Heterodera schachtii, Heterodera avenae, Heterodera glycines, Heterodera trifolii, Stock- und Blattälchen, z.B. Ditylenchus dipsaci, Ditylenchus destructor, Pratylenchus neglectus, Pratylenchus penetrans, Partylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die erfindungsgemäßen Verbindungen können mit Erfolg im Pflanzenschutz sowie auf dem Hygiene-, Vorratsschutz- und Veterinärsektor als Schädlingsbekämpfungsmittel eingesetzt werden.

Die Wirkstoffe können als solche, in Form ihrer Formulierungen oder den daraus bereiteten Anwendungsmöglichkeiten, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Äthanol, Propanol, Butanol, Chloroform, Tetrachlorkohlenstoff, Cyclohexanol, Cyclohexanon,

Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylenoctylphenoläther, äthoxyliertes Isooctylphenol, Octylphenol, Nonylphenon, Alkylphenolpolyglykoläther, Tributylphenylpolyglykoläther, Alkylarylpolyätheralkohole, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind:

I. 3 Gewichtsteile Äthylthionophosphonsäure-O-propargyl-O-(4-nitrophenyl)-ester werden mit 97 Gewichtsteilen feinteiligem Kaolin innig vermischt. Man erhält auf diese Weise ein Stäubemittel, das 3 Gewichtsprozent des Wirkstoffs enthält.

II. 30 Gewichtsteile Methylthionophosphonsäure-O-(1-methylpropargyl)-O-(4-nitrophenyl)-ester werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 20 Gewichtsteile Phenylthionophosphonsäure-O-propargyl-O-(4-nitrophenyl)-ester werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoäthanolamid, 5 Gewichtsteilen Calciumsalz der Dodecylbenzolsulfonsäure und 5 Gewichtsteilen des Anlagerungsproduktes von 40 Mol Äthylenoxid an 1 Mol Ricinusöl besteht. Durch Ausgießen und feines Verteilen der Lösung in 100 000 Gewichtsteilen Wasser erhält man eine wäßrige Dispersion, die 0,02 Gewichtsprozent des Wirkstoffs enthält.

IV. 20 Gewichtsteile Methylthionophosphonsäure-O-propargyl-O-(2-isopropyl-4-methyl-pyrimidin-6-yl)-ester werden in einer Mischung gelöst, die aus 40 Gewichtsteilen Cyclohexanon, 30 Gewichtsteilen Isobutanol, 20 Gewichtsteilen des Anlagerungsproduktes von 7 Mol Äthylenoxid an 1 Mol Isooctylphenol und 10 Gewichtsteilen des Anlagerungsproduktes von 40 Mol Äthylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.% Wirkstoff, vorzugsweise zwischen 0,5 und 90 Gew.%.

Die Wirkstoffkonzentrationen in den anwendungsfertigen Zubereitungen können in größeren Bereichen variiert werden. Im allgemeinen liegen sie zwischen 0,0001 und 10 %, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit über 95 Gew.% Wirkstoff oder sogar den Wirkstoff ohne Zusätze auszubringen.

Zu den Wirkstoffen können öle verschiedenen Typs, Herbizide, Fungizide, andere Insektizide, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1 : 10 bis 10 : 1 zugemischt werden.

Beispielsweise können folgende Mittel zugemischt werden: 1,2-Dibrom-3-chlorpropan, 1,3-Dichlorpropen, 1,3-Dichlorpropen + 1,2-Dichlorpropan, 1,2-Dibrom-äthan, 2-sec.-Butyl--phenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthal-N-methylcarbamat, 2,3-Dihydro-2,2-dimethyl-benzofuran-7-yl-N-methylcarbamat, 2,2-Dimethyl-1,3-benzodioxol-4--yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)-oxy]-thio-acetimidat, Methyl-N',N'-dimethyl-N--[(methylcarbamoyl)oxy]-1-thiooxamidat, N-(2-Methyl-4--chlor-phenyl)-N',N'-dimethylformamidin, Tetrachlorthiophen, 1-(2,6-Difluor-benzoyl)-3-(4-chlor-phenyl)-harnstoff, O,O-Dimethyl-O-(p-nitrophenyl)-phosphorthioat, O,O-Diäthyl--O-(p-nitrophenyl)-phosphorthioat, O-Äthyl-O-(p-nitrophenyl)-phenyl-phosphonothioat, O,O-Dimethyl-O-(3-methyl-4--nitrophenyl)-phosphorthioat, O,O-Diäthyl-O-(2,4-dichlorphenyl)-phosphorthioat, O-Äthyl-O-(2,4-dichlorphenyl)-phenyl-phosphonothioat, O,O-Dimethyl-O-(2,4,5-trichlorphenyl)--phosphorthioat, O-Äthyl-O-(2,4,5-trichlorphenyl)-äthyl--phosphonothioat, O,O-Dimethyl-O-(4-brom-2,5-dichlorphenyl)--phosphorthioat, O,O-Dimethyl-O-(2,5-dichlor-4-jodphenyl)--phosphorthioat, O,O-Dimethyl-O-(3-methyl-4-methylthiophenyl)-phosphorthioat, O-Äthyl-O-(3-methyl-4-methylthiophe-

nyl)-isopropyl-phosphoramidat, 0,0-Diäthyl-O-[p-(methylsulfinyl)phenyl]-phosphorthioat, O-Äthyl-S-phenyl-äthyl-phosphonodithioat, 0,0-Diäthyl-[2-chlor-1-(2,4-dichlorphenyl)-vinyl]-phosphat, 0,0-Dimethyl-[2-chlor-1-(2,4,5-trichlorphenyl)]-vinyl-phosphat, 0,0-Dimethyl-S-(1'-phenyl)-äthylacetat-phosphordithioat, Bis-(dimethylamino)-fluorphosphinoxid, Octamethyl-pyrophosphoramid, 0,0,0,0-Tetraäthyldithio-pyrophosphat, S-Chlormethyl-0,0-diäthyl-phosphordithioat, O-Äthyl-S,S-dipropyl-phosphordithioat, 0,0-Dimethyl-O-2,2-dichlorvinyl-phosphat, 0,0-Dimethyl-1,2-dibrom-2,2-dichloräthylphosphat, 0,0-Dimethyl-2,2,2-trichlor-1-hydroxy-äthylphosphonat, 0,0-Dimethyl-S-[1,2-biscarbäthoxy-äthyl-(1)]-phosphordithioat, 0,0-Dimethyl-O-(1-methyl-2-carbmethoxy-vinyl)-phosphat, 0,0-Dimethyl-S-(N-methyl-carbamoyl-methyl)-phosphordithioat, 0,0-Dimethyl-S-(N-methyl-carbamoyl-methyl)-phosphorthioat, 0,0-Dimethyl-S-(N-methoxyäthyl-carbamoyl-methyl)-phosphordithioat, 0,0-Dimethyl-S-(N-formyl-N-methyl-carbamoylmethyl-phosphordithioat, 0,0-Dimethyl-O-[1-methyl-2-(methyl-carbamoyl)-vinyl]-phosphat, 0,0-Dimethyl-O-[(1-methyl-2-dimethylcarbamoyl)-vinyl]-phosphat, 0,0-Dimethyl-O-[(1-methyl-2-chlor-2-diäthylcarbamoyl)-vinyl]-phosphat, 0,0-Diäthyl-S-(äthylthio-methyl)-phosphordithioat, 0,0-Diäthyl-S-[(p-chlorphenylthio)-methyl]-phosphordithioat, 0,0-Dimethyl-S-(2-äthylthioäthyl)-phosphorthioat, 0,0-Dimethyl-S-(2-äthylthioäthyl)-phosphordithioat, 0,0-Dimethyl-S-(2-äthylsulfinyl-äthyl)-phosphorthioat, 0,0-Diäthyl-S-(2-äthylthio-äthyl)-phosphordithioat, 0,0-Diäthyl-S-(2-äthylsulfinyl-äthyl)-phosphorthioat, 0,0-Diäthyl-thiophosphoryliminophenyl-acetonitril, 0,0-Diäthyl-S-(2-chlor-1-phthalimidoäthyl)-phosphordithioat, 0,0-Diäthyl-S-[6-chlor-benzoxazolon-(2)-yl(3)]-methyldithiophosphat, 0,0-Dimethyl-S-[2-methoxy-1,3,4-thiadiazol-5-[4H]-onyl-(4)-methyl]-phosphordithioat, 0,0-Diäthyl-O-[3,5,6-trichlor-pyridyl-(2)]-phosphorthioat, 0,0-Diäthyl-O-(2-pyrazinyl)-phosphorthioat, 0,0-Diäthyl-O-

-[2-isopropyl-4-methyl-pyrimidinyl(6)]-phosphorthioat, O,O-Diäthyl-O-[2-(diäthylamino)-6-methyl-4-pyrimidinyl]-thionophosphat, O,O-Dimethyl-S-(4-oxo-1,2,3-benzotriazin-3-[4H]-yl-methyl)-phosphordithioat, O,O-Dimethyl-S-[(4,6-diamino-1,3,5-triazin-2-yl)-methyl]-phosphordithioat, O,O-Diäthyl-(1-phenyl-1,2,4-triazol-3-yl)-thionophosphat, O,S-Dimethyl-phosphor-amido-thioat, O,S-Dimethyl-N-acetyl-phosphoramidothioat, γ-Hexachlorcyclohexan, 1,1-Di-(p-methoxyphenyl)-2,2,2-trichlor-äthan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis,trans-chrysanthemat, 5-Benzyl-furyl-(3)-methyl-DL-cis,trans-chrysanthemat, 3-Phenoxybenzyl(±)-cis,trans-2,2-dimethyl-3-(2,2-dichlorvinyl)-cyclopropancarboxylat, α-Cyano-3-phenoxybenzyl(±)-cis,trans-2,2-dimethyl-3-(2,2-dichlorvinyl)-cyclopropancarboxylat, (s)-α-Cyano-3-phenoxybenzyl-cis(1R,3R)-2,2-dimethyl-3-(2,2-dibromvinyl)-cyclopropancarboxylat, 3,4,5,6-Tetrahydrophthalimidoäthyl-DL-cis,trans-chrysanthemat, 2-Methyl-5-(2-propinyl)-3-furylmethyl-chrysanthemat, α-Cyano-3-phenoxybenzyl-α-isopropyl-4-chlorphenylacetat.

Die folgenden Beispiele belegen die biologische Wirkung der neuen Verbindungen. Vergleichsmittel ist O,O-Dimethyl-O-(3-methyl-4-nitro-phenyl)-phosphorthioat (GB-PS 919874). Die Numerierung der Wirkstoffe entspricht der tabellarischen Auflistung.

Beispiel A

Kontaktwirkung auf Stubenfliegen (Musca domestica); Applikationstest

4 Tage alte Imagines erhalten in leichter $CO_2$-Narkose 1 µl der acetonischen Lösung des Wirkstoffs auf das ventrale Abdomen appliziert. Hierzu wird eine Mikrometerspritze verwendet. Je 20 Versuchstiere mit gleicher Behandlung bringt man dann in einen Folienbeutel (Volumen ca. 500 ml).

Nach 4 Stunden zählt man die Tiere in Rückenlage aus und ermittelt graphisch die LD 50.

| Wirkstoff Nr. | LD 50 |
|---|---|
| 2 | 0,125 µg/Fliege |
| 4 | 0,09 " " |
| 17 | 0,085 " " |
| 23 | 0,097 " " |
| 24 | 0,12 " " |
| 36 | 0,05 " " |
| 40 | 0,1 " " |
| 45 | 0,11 " " |
| 58 | 0,16 " " |

Beispiel B

Kontaktwirkung auf Stubenfliegen (Musca domestica); Dauerwirkung

Aufgerauhte Glasplatten von 15 x 15 cm Seitenlänge werden gleichmäßig mit der acetonischen Wirkstofflösung behandelt. Nach dem Verdunsten des Lösungsmittels werden je 10 4-Tage alte Stubenfliegen unter einer Petrischale (Durchmesser 10 cm) auf die Glasplatten gesetzt. Die Mortalität nach 4 Stunden gilt als Richtwert im Versuch.

Die Prüfungen werden in Tagesabständen wiederholt, bis die behandelten Platten keine Wirkung mehr zeigen. Die Versuchstemperatur beträgt 20-22 °C.

| Wirkstoff Nr. | Wirkstoffmenge pro Petrischale [mg] | |
|---|---|---|
| 2 | 1 | 8 Tage Wirkung |
| 5 | 1 | 8 " " |
| 13 | 1 | 8 " " |
| 14 | 1 | 16 " " |
| 23 | 1 | 16 " " |
| 24 | 1 | 8 " " |
| 28 | 1 | 16 " " |
| 36 | 1 | 16 " " |
| 58 | 1 | 8 " " |
| Vergleichsmittel | 1 | 4 " " |

Beispiel C

Kontaktwirkung auf Baumwollwanzen (Dysdercus intermedius)

Petrischalen von 10 cm Durchmesser werden mit 1 ml der acetonischen Wirkstofflösung ausgekleidet. Nach Verdunsten des Lösungsmittels besetzt man die Schalen mit je 20 Larven des vorletzten Stadiums und registriert die Wirkung nach 24 Stunden.

| Wirkstoff Nr. | Wirkstoffmenge pro Petrischale [mg] | Mortalitätsrate [%] |
|---|---|---|
| 1 | 0,02 | 100 |
| 4 | 0,01 | 100 |
| 5 | 0,005 | 100 |
| 13 | 0,01 | 100 |
| 17 | 0,01 | 100 |
| 23 | 0,002 | 100 |
| 24 | 0,001 | 100 |
| 36 | 0,005 | 100 |
| 37 | 0,002 | 100 |
| 40 | 0,005 | 100 |
| 45 | 0,005 | 100 |
| Vergleichsmittel | 0,01 | 80 |

Beispiel D

Mittelmeer-Fruchtfliege (Ceratitis capitata); Zuchtversuch

Die Versuche werden in 100 ml Plastik-Bechern auf 40 g eines Nährbodens aus Karottenpulver und Wasser 1:3 mit Hefezusatz durchgeführt.

Der Wirkstoff wird als wäßrige Aufbereitung in den fertigen Brei eingerührt und dieser mit 100 bis 200 frischen Eiern beimpft. Die Becher werden dann bei 24 bis 26°C geschlossen aufbewahrt; nach ca. einer Woche wird die Entwicklung beurteilt.

| Wirkstoff Nr. | Entwicklungshemmung in % bei einer Wirkstoffkonzentration von | | | |
|---|---|---|---|---|
| | 1 ppm | 0,5 ppm | 0,2 ppm | 0,1 ppm |
| 1 | 100 | ca. 80 | <50 | |
| 2 | 100 | 100 | ca. 98 | ca. 80 |
| 4 | 100 | ca. 80 | <50 | |
| 5 | 100 | 100 | ca. 80 | <50 |
| 13 | 100 | 100 | 100 | <50 |
| 14 | 100 | 100 | <50 | |
| 23 | 100 | 100 | 100 | <50 |
| 24 | 100 | ca. 95 | <50 | |
| 36 | 100 | 100 | 100 | 100 |
| 37 | 100 | 100 | 100 | <50 |
| 40 | 100 | 100 | 100 | ca. 80 |
| 45 | 100 | 100 | 100 | ca. 80 |

Beispiel E

Wirkung auf Raupen von Prodenia litura

Junge Kohlblätter werden 3 Sekunden lang in die wäßrige Aufbereitung der Wirkstoffe getaucht. Nach dem Antrocknen der Beläge bringt man sie in Petrischalen (Durchmesser 10 cm)

und besetzt sie mit 5 Raupen von ca. 1,5 cm Länge. Die Wirkung wird nach 48 Stunden festgestellt.

| Wirkstoff Nr. | Mortalitätsrate in % bei einer Wirkstoffkonzentration von | | | | |
|---|---|---|---|---|---|
| | 0,04 | 0,02 | 0,01 | 0,005 | 0,0025 |
| 1 | 100 | 100 | 100 | 95 | 80 |
| 2 | 100 | 100 | 80 | | |
| 4 | 100 | 100 | | | |
| 5 | 100 | 100 | 100 | 80 | |
| 13 | 100 | 100 | 100 | 80 | |
| 14 | 100 | 100 | 80 | | |
| 23 | 100 | 100 | 100 | 100 | 100 |
| 36 | 100 | 100 | 80 | | |
| 53 | 100 | 100 | 100 | | |
| Vergleichsmittel | 100 | <80 | | | |

Beispiel F

Fraß- und Kontaktwirkung auf Raupen der Kohlschabe (Plutella maculipennis)

Blätter von jungen Kohlpflanzen werden 3 Sekunden lang in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.
Nach 48 Stunden beurteilt man die Wirkung.

| Wirkstoff Nr. | Mortalitätsrate in % bei einer Wirkstoffkonzentration von 0,01 | 0,005 | 0,002 |
|---|---|---|---|
| 1 | 100 | 80 | |
| 2 | 100 | 80 | |
| 4 | 100 | 80 | |
| 5 | 100 | 100 | 80 |
| 9 | 80 | | |
| 13 | 100 | 80 | |
| 17 | 100 | | |
| 23 | 100 | 80 | |
| 31 | 100 | 80 | |
| 40 | 100 | 100 | |
| 53 | 100 | 90 | |
| 59 | 80 | | |

Beispiel G

Kontaktwirkung auf Grillen (Acheta domestica)

Je 100 g angefeuchteter Sand werden mit der wäßrigen Wirkstoffaufbereitung gründlich gemischt und in 1 l-Gläser gefüllt. Pro Glas setzt man dann 10 Grillen im letzten Larvenstadium.

Die Mortalitätsrate wird nach 48 Stunden ermittelt.

| Wirkstoff Nr. | Wirkstoffkonzentration [ppm] | Mortalitätsrate [%] |
|---|---|---|
| 1 | 1,0 | 80 |
| 2 | 1,0 | 100 |
| 4 | 2,0 | 80 |
| 5 | 1,0 | 80 |
| 13 | 1,0 | 100 |
| 17 | 2,0 | 100 |
| 23 | 1,0 | 100 |
| 24 | 0,4 | 100 |
| 36 | 1,0 | 100 |
| 37 | 1,0 | 100 |
| 53 | 2,0 | 100 |
| 58 | 2,0 | 100 |

Beispiel H

Kontaktwirkung auf Chagas-Wanzen (Rhodnius prolixus)

Petrischalen von 10 cm Durchmesser werden mit 1 ml der acetonischen Wirkstofflösung ausgekleidet. Nach dem Verdunsten des Lösungsmittels belegt man die Schalen mit je 10 Wanzen im letzten Larvenstadium.
Die Wirkung wird nach 24 Stunden abgelesen.

| Wirkstoff Nr. | Wirkstoffmenge pro Petrischale [mg] | Mortalitätsrate [%] |
|---|---|---|
| 1 | 0,01 | 100 |
| 2 | 0,05 | 100 |
| 4 | 0,02 | 100 |
| 5 | 0,005 | 100 |
| 13 | 0,02 | 100 |
| 14 | 0,005 | 100 |
| 17 | 0,01 | 80 |
| 23 | 0,02 | 100 |
| 36 | 0,001 | 100 |
| 37 | 0,002 | 100 |

Beispiel I

Wirkung auf Spinnmilben (Tetranychus telarius);O.P.-resistent

Getopfte Bohnenpflanzen, die das zweite Folgeblattpaar zeigen und stark mit Spinnmilben infiziert sind, werden in der Spritzkabine mit der wäßrigen Wirkstoffaufbereitung tropfnaß gespritzt. Die Pflanzen kommen dazu auf den Drehteller und werden von allen Seiten mit insgesamt 50 ml Spritzbrühe besprüht. Der Sprühvorgang dauert ca. 22 Sekunden.

Die Beurteilung der Wirkung erfolgt nach 10 Tagen.

| Wirkstoff Nr. | Wirkstoffkonzentration der Aufbereitung [%] | Mortalitätsrate [%] |
|---|---|---|
| 4 | 0,1 | 100 |
| | 0,05 | ca. 95 |
| 36 | 0,05 | 100 |
| 45 | 0,1 | 100 |
| 46 | 0,1 | 100 |
| | 0,05 | ca. 95 |
| Vergleichsmittel | 0,1 | unwirksam |

Beispiel K

Wirkung auf Wurzelgallennematoden (Meloidogyne incognita) an Gurken

200 g Gartenerde, die stark mit Meloidogyne incognita infiziert ist, werden mit 30 ml der wäßrigen Wirkstoffaufbereitung innig vermischt. Die Erde wird darauf in Plastiktöpfe gefüllt und mit zwei Gurkensamen belegt. Die Versuchstemperatur unterschreitet dabei nicht +22°C.

Nach 6 bis 8 Wochen werden die Wurzeln auf Gallenbildung untersucht.

| Wirkstoff Nr. | Wirkstoffkonzentration [ppm] | |
|---|---|---|
| 14 | 150 | keine Gallenbildung |
| 45 | 150 | " " |
| 46 | 75 | " " |
| 65 | 75 | " " |
| Vergleichsmittel | 150 | mäßige Gallenbildung |

0012320



## Patentansprüche

1. Thionophosphonsäureester der Formel I

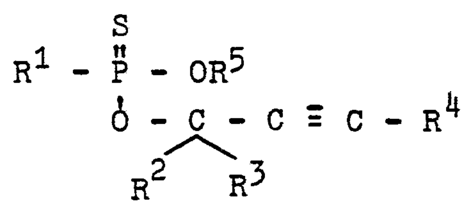

I,

in der

$R^1$ einen Alkylrest mit 1 bis 3 Kohlenstoffatomen, der durch Halogen substituiert sein kann, oder einen Phenylrest, der durch Alkylgruppen mit 1 bis 3 Kohlenstoffatomen substituiert sein kann,

$R^2$ Wasserstoff oder einen Alkylrest mit 1 bis 4 Kohlenstoffatomen,

$R^3$ Wasserstoff oder einen Alkylrest mit 1 bis 4 Kohlenstoffatomen,

$R^4$ Wasserstoff oder einen Alkylrest mit 1 bis 3 Kohlenstoffatomen, der durch Halogen substituiert sein kann, und

$R^5$ einen Arylrest, der durch Halogen, Alkyl mit 1 bis 4 Kohlenstoffatomen, Nitro, Cyano, Acylreste mit 2 bis 5 Kohlenstoffatomen, Alkoxy- oder Alkylthioreste mit 1 bis 4 Kohlenstoffatomen, Aryloxy-, Arylthio- oder Arylazoreste mit 6 bis 10 Kohlenstoffatomen, Alkylsulfinyl- oder Alkylsulfonylreste mit 1 bis 3 Kohlenstoffatomen, Arylsulfinyl- oder Arylsulfonylreste mit 6 bis 8 Kohlenstoffatomen substituiert sein kann, einen stickstoffhaltigen, heterocyclischen Rest mit

5 oder 6 Ringgliedern, der durch Halogen, Alkyl, Alkoxy oder Alkylthio mit 1 bis 4 Kohlenstoffatomen oder durch Dialkylamino mit 1 bis 4 Kohlenstoffatomen je Alkylgruppe substituiert sein kann, oder einen unverzweigten oder verzweigten Alkenylrest mit 2 bis 4 Kohlenstoffatomen, der durch Halogen, N-Alkyl-carbamoylreste oder N,N-Dialkyl--carbamoylreste mit 1 bis 6 Kohlenstoffatomen in einer Alkylgruppe, Alkoxycarbonyl, Aryloxycarbonyl oder durch gegebenenfalls durch Halogen, Nitro, Alkyl oder Alkoxy mit 1 bis 4 Kohlenstoffatomen substituiertes Phenyl substituiert sein kann,

bedeuten.

2. Thionophosphonsäureester der Formel I gemäß Anspruch 1, <u>dadurch gekennzeichnet</u>, daß $R^5$ einen Phenylrest, der durch Halogen, Alkyl mit 1 bis 4 Kohlenstoffatomen, Nitro, Cyano oder Alkylthio mit 1 bis 4 Kohlenstoffatomen substituiert ist, bedeutet.

3. Verfahren zur Herstellung von Thionophosphonsäureestern der Formel I, <u>dadurch gekennzeichnet</u>, daß man Thionophosphonersterchloride der Formel II

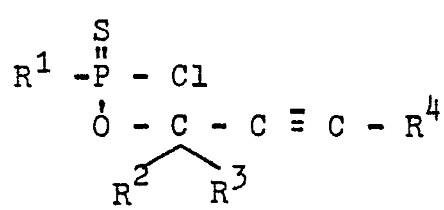

II,

in der $R^1$, $R^2$, $R^3$ und $R^4$ die in Anspruch 1 genannten Bedeutungen haben,

mit Verbindungen der Formel III

$$R^5OH \qquad III,$$

in der $R^5$ die in Anspruch 1 genannten Bedeutungen hat, oder einem Alkalisalz einer Verbindung der Formel III in Gegenwart eines inerten organischen Lösungsmittels und gegebenenfalls in Gegenwart einer Base umsetzt.

4. Schädlingsbekämpfungsmittel, gekennzeichnet durch einen Gehalt an mindestens einem Thionophosphonsäureester der Formel I gemäß Anspruch 1.

5. Verwendung von Thionophosphonsäureestern der Formel I gemäß Anspruch 1 zur Bekämpfung von Schädlingen.

6. Verfahren zur Bekämpfung von Schädlingen, dadurch gekennzeichnet, daß man Thionophosphonsäureester der Formel I auf die Schädlinge bzw. deren Lebensräume einwirken läßt.

Europäisches Patentamt

# EUROPÄISCHER RECHERCHENBERICHT

0012320

Nummer der Anmeldung

EP 79 10 4856

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 1 266 440 (STAUFFER)<br>* Spalte 1; Seite 2, Beispiel 4 * | 1-6 |
| | FR - A - 2 385 729 (BAYER)<br>* Seite 31, Verbindung 25; Ansprüche * | 1,4 |
| | US - A - 3 065 125 (P.E. NEWALLIS)<br>* Das ganze Dokument * | 1,4 |
| | FR - A - 1 559 456 (BAYER)<br>* Das ganze Dokument * | 1,4 |
| | US - A - 3 780 143 (A.D. GUTMAN)<br>* Das ganze Dokument * | 1,4 |
| DA | FR - A - 2 217 346 (S.C. JOHNSON & SON)<br>* Ansprüche *<br>---- | |

KLASSIFIKATION DER ANMELDUNG (Int.Cl. [3])

C 07 F 9/40
9/58
9/65
A 01 N 57/18//
C 07 F 9/42

RECHERCHIERTE SACHGEBIETE (Int. Cl. [3])

C 07 F 9/40
9/58
9/65

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 07-03-1980 | BESLIER |